# FASCICULE DE BREVET EUROPEEN

(11) **EP 1 255 123 B1**
(45) Date de publication et mention de la délivrance du brevet: **18.08.2004**
(21) Numéro de dépôt: 01201648.1
(22) Date de dépôt: 04.05.2001
(51) Int. Cl.: G01S 5/14, G01S 1/04

(54) **Récepteur de signaux radiofréquences ayant des moyens pour améliorer la dynamique de réception desdits signaux**
Funksignalempfänger mit Mittel zur Vergrösserung der Dynamik des Empfangs der Signale
RF signal receiver with means to improve the dynamics of the reception of the signals

(43) Date de publication de la demande: 06.11.2002
(73) Titulaire: ASULAB S.A., 2074 Marin (CH)
(72) Inventeur: Oesch, Yves, 2000 Neuchâtel (CH); Monthéard, Anne, 1312 Eclépens (CH); Farine, Pierre-André, 2000 Neuchâtel (CH)
(74) Mandataire: Laurent, Jean

(56) Documents cités:
- WO-A-98/59257
- US-A- 6 028 887

## Description

L'invention concerne un récepteur de signaux radiofréquences émis par des sources émettrices, notamment du type GPS. Le récepteur a des moyens pour améliorer la dynamique de réception desdits signaux par exemple lors de masquage de signaux par un obstacle. Ledit récepteur comprend des moyens de réception et de mise forme avec conversion de fréquence des signaux radiofréquences pour produire des signaux intermédiaires, un étage de corrélation composé de plusieurs canaux de corrélation pour recevoir les signaux intermédiaires afin de les corréler dans des boucles d'asservissement des canaux en fonction avec des répliques de la fréquence porteuse et du code spécifique de sources émettrices visibles à chercher et à poursuivre, chaque canal étant muni d'un corrélateur dans lequel au moins un intégrateur compteur est susceptible de fournir, au terme de chaque période déterminée d'intégration des signaux corrélés, un mot binaire de sortie dont la valeur comparativement à un niveau de seuil déterminé de détection permet de détecter la présence ou l'absence de la source émettrice visible à chercher et à poursuivre, et des moyens à microprocesseur reliés à l'étage de corrélation pour traiter les données tirées, après corrélation, des signaux radiofréquences. Dans le cas d'un récepteur GPS, les données tirées des signaux sont notamment le message GPS et les pseudo-distances.

Le récepteur de signaux radiofréquences de la présente invention peut bien évidemment être utilisé également dans un système de navigation par satellites de type GLONASS ou GALILEO. De même, le récepteur pourrait servir dans un réseau de téléphonie mobile par exemple du type CDMA (Code-division multiple access en terminologie anglaise). Dans ce cas les sources émettrices ne sont plus des satellites mais des cellules de base du réseau de téléphonie, et les données traitées concernent des messages audibles ou à lire.

Dans le système de navigation GPS actuel, 24 satellites sont placés en orbite à une distance proche de 20'200 Km au-dessus de la surface de la Terre sur 6 plans orbitaux décalés chacun de 55° par rapport à l'équateur. Le temps mis par un satellite pour accomplir une rotation complète en orbite afin de se retrouver au même point au-dessus de la Terre est environ de 12h. La répartition des satellites en orbite permet à un récepteur GPS terrestre de recevoir les signaux GPS d'au moins quatre satellites visibles pour déterminer sa position, sa vitesse et l'heure locale par exemple.

Dans des applications civiles, chacun des satellites en orbite émet des signaux radiofréquences composés d'une fréquence porteuse L1 à 1,57542 GHz sur laquelle sont modulés un code pseudo-aléatoire PRN à 1,023 MHz propre à chaque satellite et un message GPS à 50 Hz. Le message GPS contient les données d'éphémérides et d'almanachs du satellite émetteur qui sont utiles notamment pour le calcul de la position en X, Y et Z, de la vitesse et du temps.

Le code pseudo-aléatoire PRN (pseudo random noise), notamment du type code de Gold, est différent pour chaque satellite. Ce code de Gold est un signal numérique composé de 1023 chips qui se répètent toutes les millisecondes. Cette période de répétition est définie également par le terme époque (epoch en terminologie anglaise) du code de Gold. Il est à noter qu'un chip prend des valeurs 1 ou 0 comme pour un bit. Toutefois, un chip (terme utilisé dans la technique GPS) est à différencier d'un bit qui est utilisé pour définir une unité d'information.

Les codes de Gold définis pour 32 numéros d'identification de satellites ont la caractéristique d'être orthogonaux. En les corrélant l'un avec l'autre le résultat de la corrélation donne une valeur proche de 0. Cette caractéristique permet de pouvoir traiter indépendamment plusieurs signaux radiofréquences émis sur une même fréquence provenant de plusieurs satellites de façon simultanée dans plusieurs canaux d'un même récepteur GPS.

Actuellement dans plusieurs activités quotidiennes, des récepteurs GPS portables ou incorporés notamment dans des véhicules sont employés pour permettre de fournir aux utilisateurs des données de navigation. Ces données leur facilitent leur orientation au but recherché et leur connaissance du lieu qu'ils occupent. De plus, les récepteurs GPS portables sont réduits en taille de manière à pouvoir également les incorporer dans des objets aisément transportables par une seule personne, tels que dans des téléphones cellulaires ou dans des montres-bracelets. Toutefois dans ces objets de petite dimension, il est souvent nécessaire de minimiser l'énergie consommée du récepteur, car ils sont alimentés par une batterie ou un accumulateur de taille réduite.

Un récepteur GPS a besoin de capter les signaux radiofréquences émis d'au moins quatre satellites visibles pour déterminer notamment sa position et les données temporelles. Toutefois, le récepteur peut prélever les données d'almanachs propre à chaque satellite en se verrouillant individuellement sur un des satellites visibles.

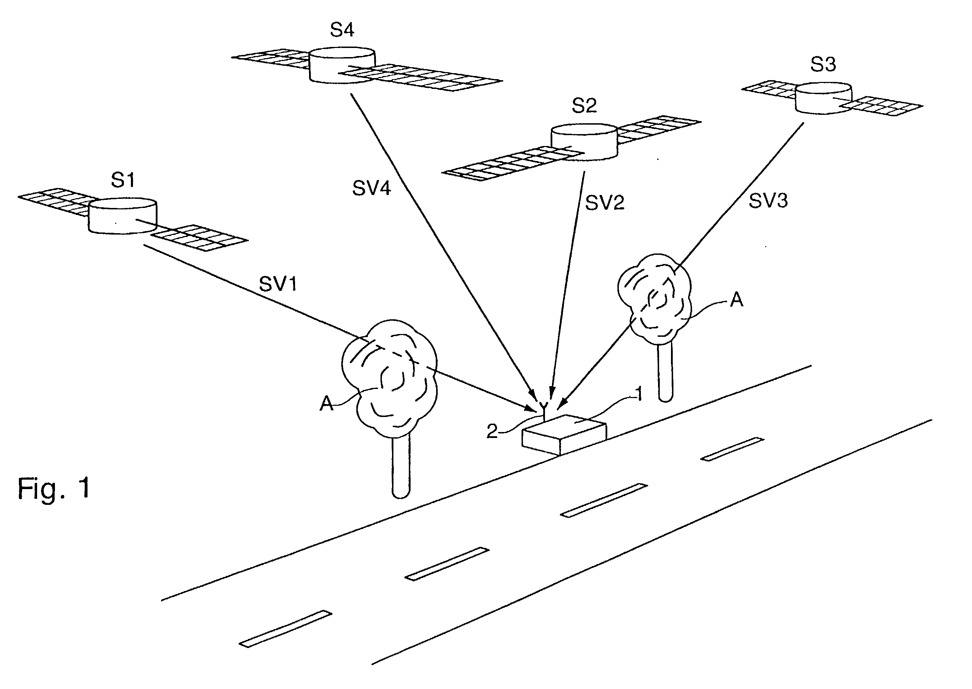

Comme le représente symboliquement la figure 1, le récepteur GPS 1 comprend une antenne 2 pour capter les signaux radiofréquences SV1 à SV4 émis par au moins quatre satellites visibles S1 à S4. Toutefois, certains des signaux radiofréquences peuvent rencontrer sur leur trajet divers obstacles, tels que des arbres A par exemple, susceptibles de perturber la perception des signaux par ledit récepteur. Ce masquage des signaux SV1 et SV3, comme montré à la figure 1, a pour conséquence que les canaux de corrélation mis en fonction dans le récepteur pour la recherche et la poursuite des satellites S1 et S3 peuvent momentanément perdre lesdits signaux SV1 et SV3. Ainsi le récepteur en phase de recherche et de poursuite de satellites ne peut pas tirer les informations nécessaires pour le calcul de sa position ce qui est un inconvénient.

Ce phénomène peut apparaître également lorsque le récepteur portable GPS est en mouvement par exemple dans un véhicule routier. Dans ce cas, il est fréquent qu'une multitude d'arbres placés en bordure de route masque momentanément les signaux radiofréquences de certains satellites visibles captés par ledit récepteur en mouvement. Suite à la perte des signaux masqués, ledit récepteur doit opérer une nouvelle recherche et poursuite pour se verrouiller sur au moins quatre satellites visibles. Toutes les opérations pour la détermination de la position, de la vitesse et du temps sont donc ralenties.

De manière à récupérer rapidement des signaux perdus dus à un obstacle, tel qu'un arbre ou un tunnel, le document EP 0 429 783 décrit une méthode de poursuite de signaux de satellites de type GPS pour un récepteur GPS placé notamment dans un véhicule. Dès que l'obstacle a été franchi, ledit récepteur recherche le satellite à la plus haute élévation ce qui permet d'éviter autant que possible que les signaux soient masqués par un arbre. La fréquence des signaux du satellite sont divisés en bandes de fréquence dont chaque bande de fréquence est attribuée à un des canaux de corrélation pour accélérer l'acquisition dudit satellite. Plusieurs canaux de corrélation sont donc utilisés pour un même satellite.

Un autre exemple d'un récepteur GPS est décrit dans le document WO 98 59 257, qui montre un verrouillage rapide sur les satellites.

Cependant, les canaux devant se verrouiller sur le même satellite sont configurés de différentes manières pour la recherche rapide du même satellite à la plus haute élévation ce qui est un inconvénient même si ledit satellite est rapidement trouvé. Aucun moyen n'est également prévu pour éviter la perte momentanée de signaux affaiblis par passage à travers un obstacle tel qu'un arbre, lorsque les signaux proviennent de satellites visibles qui n'ont pas la plus haute élévation.

Un but de la présente invention consiste à réaliser un récepteur de signaux radiofréquences notamment de type GPS permettant de prévenir la perte momentanée des signaux captés par au moins un canal du récepteur, qui sont masqués par un obstacle sur leur trajet en palliant les inconvénients des récepteurs de l'art antérieur.

Ce but, ainsi que d'autres sont atteints par le récepteur cité ci-devant qui se caractérise en ce que les moyens à microprocesseur sont agencés pour configurer au moins un canal inutilisé placé en parallèle avec un des canaux en fonction pour la recherche et/ou la poursuite d'une même source émettrice visible, le canal inutilisé étant configuré de manière que la période d'intégration de son intégrateur compteur soit différente de la période d'intégration de l'intégrateur compteur du canal en fonction.

Un avantage du récepteur est de pouvoir régler la sensibilité de détection du récepteur en faisant varier le temps ou la période d'intégration d'intégrateurs compteurs d'un canal défini comme inutilisé. Le canal inutilisé est ainsi configuré pour chercher et poursuivre une même source émettrice, tel qu'un satellite, qu'un des canaux en fonction.

Les intégrateurs compteurs du canal inutilisé auront tendance en fonctionnement normal sans obstacles à saturer si leur période d'intégration est supérieure à une période d'intégration conventionnelle. Dans ce cas, ce ne sont que les données du canal normalement configuré qui sont prises en compte par les moyens à microprocesseur. Par contre, lorsque les signaux sont affaiblis par passage à travers l'obstacle ou interruption momentanée, le canal inutilisé avec sa période d'intégration plus grande peut réussir néanmoins à détecter la présence du satellite. Le microprocesseur détecte la perte des signaux du canal en fonction configuré de manière standard pour tirer les données du canal inutilisé.

Un autre avantage du récepteur est de permettre un calcul de positionnement rapidement même si les signaux radiofréquences d'un satellite visible sont masqués par un obstacle sur leur trajet grâce au canal inutilisé branché en parallèle avec un canal configuré normalement. Le canal inutilisé peut être branché en parallèle avec un des canaux sélectionnés en fonction dès que ce dernier ne détecte plus le satellite spécifique poursuivi ou depuis le début de la recherche du canal sélectionné.

En principe dès le début de la phase d'acquisition, les moyens à microprocesseur peuvent automatiquement sélectionner un premier canal configuré de manière standard branché en parallèle avec un autre canal inutilisé configuré avec une période d'intégration plus grande. Plus d'un canal inutilisé peut être branché en parallèle d'un canal sélectionné pour se verrouiller sur un même satellite visible.

La période d'intégration du canal inutilisé est de préférence le double de la période d'intégration du canal configuré de manière conventionnelle. Le ou les canaux inutilisés branchés au canal sélectionné en fonction restent de préférence enclenchés tout le temps en prévision de la perte des signaux du canal sélectionné. Toutefois, par économie d'énergie, il peut être souhaitable d'enclencher le canal ou les canaux inutilisés que périodiquement, ou uniquement sur certains satellites.

La longueur de répétition du code pseudo-aléatoire spécifique du satellite émetteur sert de base pour définir la période d'intégration d'un canal dans un mode de fonctionnement normal sans obstacle. La taille des intégrateurs compteurs dépend de la longueur du code pseudo-aléatoire ce qui définit la dynamique du récepteur.

Le récepteur doit comporter un nombre de canaux plus grand que le nombre maximum de satellites visibles. Ceci permet de configurer différemment un canal inutilisé en fonctionnement normal en prévision d'un masquage par un obstacle des signaux captés par un des canaux.

Un autre avantage de brancher un canal inutilisé avec un des canaux en fonction pour prévenir la perte momentanée des signaux est d'assurer une continuité dans le prise des données des canaux en fonction par les moyens à microprocesseur.

Un autre avantage du récepteur est de pouvoir munir également chaque canal avec un contrôleur de manière à décharger les moyens à microprocesseur de toutes les tâches de synchronisation pour la recherche et la poursuite d'un satellite. Ceci permet de réduire le transfert de multiples données des canaux en fonction avec les moyens à microprocesseur pendant toutes ces phases de recherche et de poursuite de satellites.

Les buts, avantages et caractéristiques du récepteur de signaux radiofréquences ayant des moyens d'amélioration de la dynamique de réception des signaux apparaîtront mieux dans la description suivante de formes d'exécution illustrées par les dessins sur lesquels :
- la figure 1 déjà citée représente un récepteur de signaux radiofréquences de type GPS captant des signaux d'au moins quatre satellites dont deux sont masqués par des obstacles,
- la figure 2 représente schématiquement les diverses parties du récepteur de signaux radiofréquences selon l'invention,
- la figure 3 représente schématiquement les éléments d'un corrélateur d'un canal de l'étage de corrélation du récepteur selon l'invention, et
- la figure 4 représente un graphique des valeurs de mots binaires en sortie des intégrateurs compteurs en fonction du temps d'intégration.

Dans la description suivante, plusieurs éléments du récepteur de signaux radiofréquence notamment du type GPS qui sont bien connus de l'homme du métier dans ce domaine technique ne sont relatés que de manière simplifiée. Le récepteur décrit ci-dessous est de préférence un récepteur GPS. Il pourrait néanmoins servir dans un système de navigation GLONASS ou GALILEO ou un autre système de navigation, ou également dans un réseau de téléphonie mobile.

Comme montré dans la figure 1, les signaux radiofréquences SV1 à SV4 sont émis par quatre satellites visibles S1 à S4. Les signaux SV1 à SV4 de ces quatre satellites sont nécessaires à un récepteur GPS 1 pour pouvoir tirer toutes les informations utiles au calcul de sa position, de sa vitesse et/ou du temps. Toutefois, sur le trajet desdits signaux radiofréquences divers obstacles, tels que des arbres A, peuvent perturber la détection desdits signaux par des canaux de corrélation du récepteur 1. Les signaux radiofréquences SV1 et SV3 représentés doivent passer à travers un obstacle pour être captés par l'antenne 2 du récepteur 1. Les canaux de corrélation en phase de recherche et de poursuite des satellites S1 et S3 peuvent donc perdre momentanément les signaux SV1 et SV3. Des moyens d'amélioration de la dynamique de réception, décrits dans la suite de la description, sont donc prévus dans le récepteur GPS pour prévenir cette perte des signaux masqués par de tels obstacles.

Le récepteur GPS peut équiper de préférence un objet portable, tel qu'une montre-bracelet afin de fournir au besoin des données de position, de vitesse et de l'heure locale au porteur de la montre. Comme la montre possède un accumulateur ou une pile de petite taille, la puissance consommée doit être la plus faible possible lors du fonctionnement du récepteur GPS.

Bien entendu, le récepteur GPS pourrait équiper d'autres objets portables de petite taille à faible consommation, tels que des téléphones portables, qui sont munis également d'un accumulateur d'énergie ou d'une pile.

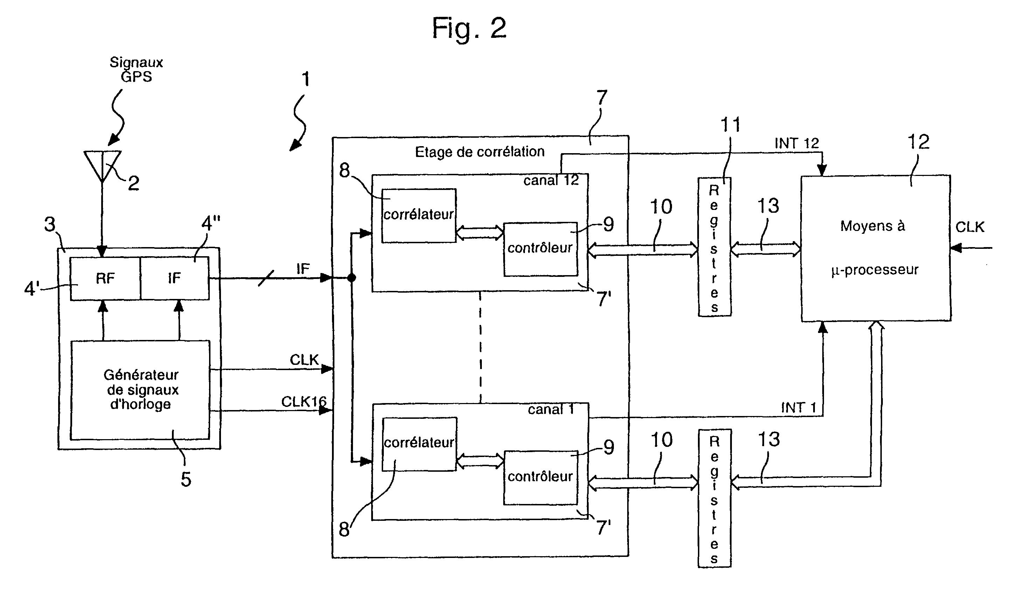

Le récepteur GPS 1 est représenté schématiquement à la figure 2. Il comprend des moyens de réception et de mise en forme avec conversion de fréquence des signaux radiofréquences 3 fournis par une antenne 2 pour produire des signaux intermédiaires IF, un étage de corrélation 7 constitué de 12 canaux 7' pour recevoir les signaux intermédiaires IF, un bus transfert de données 10 reliant chaque canal à un registre tampon 11 respectif, et finalement un bus de données 13 reliant chaque registre tampon à des moyens à microprocesseur 12.

Les signaux intermédiaires IF sont de préférence, sous forme complexe, composés d'une composante de signaux en phase I et d'une composante de signaux en quadrature Q à une fréquence de l'ordre de 400 kHz fournis par les moyens de mise en forme 3. Les signaux intermédiaires complexes IF sont représentés sur la figure 2 par une ligne en gras coupée d'une barre oblique définissant 2 bits.

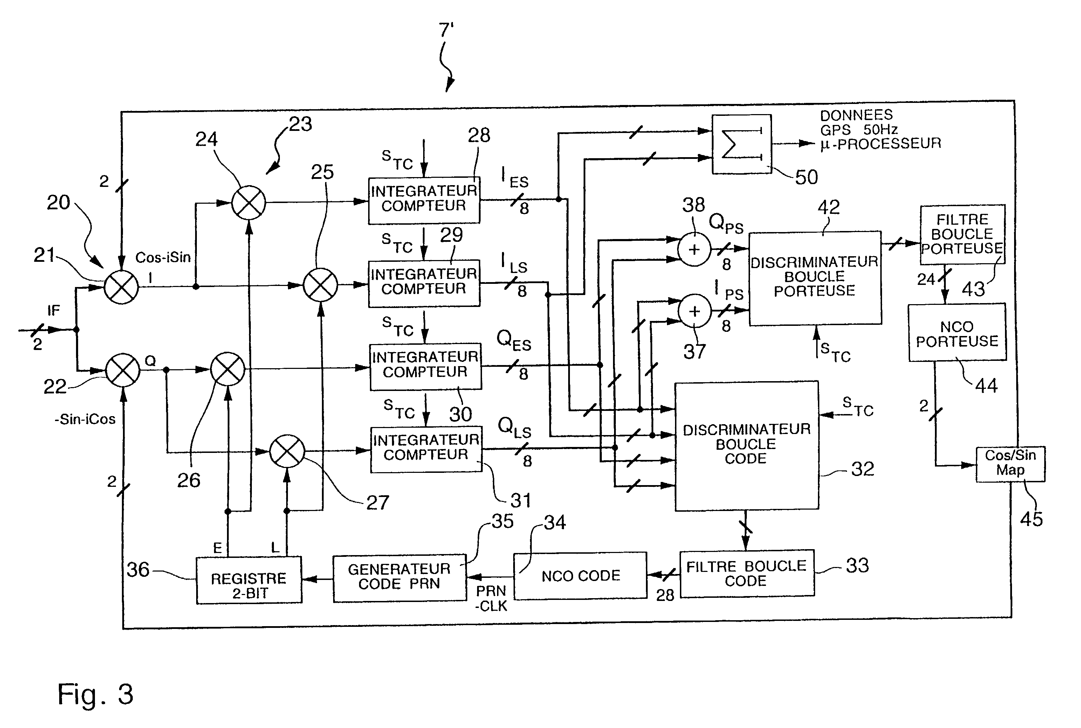

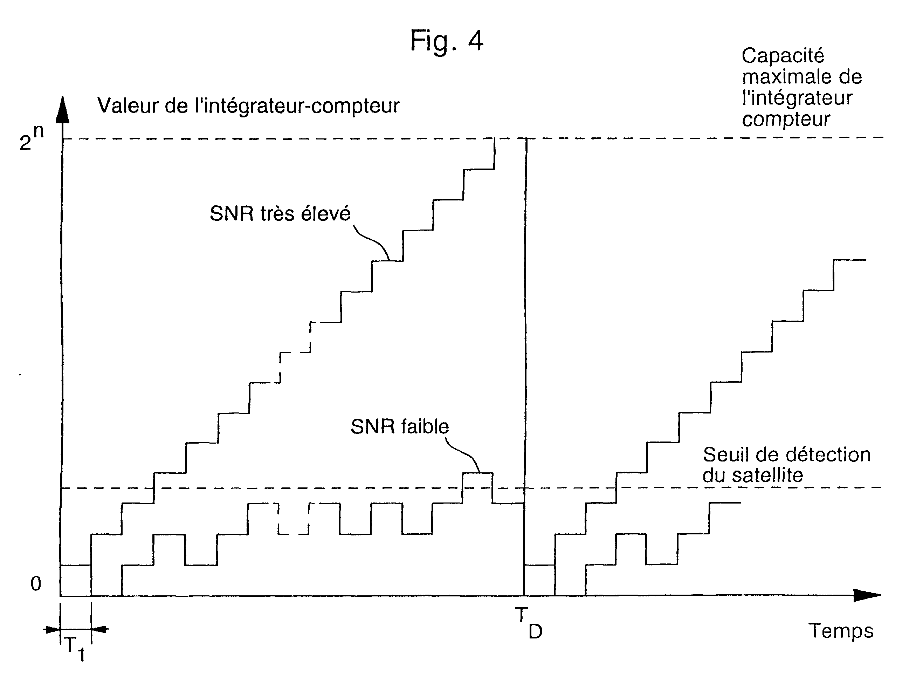

Le nombre de canaux 7' à disposition dans le récepteur 1 doit être supérieur au nombre maximum de satellites visibles en tout point de la Terre de manière qu'il subsiste un certain nombre de canaux inutilisés. Ces canaux inutilisés sont utilisés pour être connectés en parallèle avec des canaux en fonction pour prévenir la perte momentanée des signaux de ces canaux comme expliqué ci-dessous notamment en référence aux figures 3 et 4.

Conventionnellement dans les moyens de réception 3, un premier circuit électronique 4' convertit tout d'abord les signaux radiofréquences de fréquence 1,57542 GHz en une fréquence par exemple de 179 MHz. Un second circuit électronique IF 4" procède à une double conversion pour amener les signaux GPS tout d'abord à une fréquence de 4,76 MHz puis finalement à une fréquence par exemple de 400 kHz en échantillonnant à 4,36 MHz. Des signaux intermédiaires complexes IF échantillonnés et quantifiés à fréquence de l'ordre de 400 kHz sont ainsi fournis aux canaux 7' de l'étage de corrélation 7.

Pour les opérations de conversion de fréquence, un générateur de signaux d'horloge 5 fait partie des moyens de réception et de mise en forme des signaux radiofréquences 3. Ce générateur est muni par exemple d'un oscillateur à quartz non représenté calibré à une fréquence de l'ordre de 17,6 MHz. Deux signaux d'horloge CLK et CLK16 sont fournis notamment à l'étage de corrélation 7 et aux moyens à microprocesseur 12 pour cadencer toutes les opérations de ces éléments. La première fréquence d'horloge CLK peut valoir 4,36 MHz, tandis que la seconde fréquence d'horloge peut être fixée 16 fois inférieure, c'est-à-dire à 272,5 kHz utilisée pour une grande partie de l'étage de corrélation afin de gagner en consommation d'énergie.

Il est à noter qu'il peut être envisagé d'obtenir le signal d'horloge CLK16 à l'aide d'un diviseur placé dans l'étage de corrélation au lieu d'être intégré avec le générateur de signaux d'horloge 5 dans les moyens de réception 3.

Les signaux fournis par le second circuit 4" donnent dans la moitié des cas des signaux de parité différente (+1 et -1). Il doit donc être tenu compte de cette parité pour les opérations de démodulation des signaux GPS dans le récepteur. Dans une variante de réalisation, le second circuit 4" peut donner des signaux (+3; +1; -1; -3) répartis sur 2 bits de sortie pour la composante en phase, ainsi que pour la composante en quadrature.

Dans le cas du récepteur GPS de la présente invention, des signaux intermédiaires IF à 1-bit de quantification pour la fréquence de la porteuse sont fournis à l'étage de corrélation, même si cette quantification génère une perte additionnelle de l'ordre de 3 dB sur le rapport du signal sur bruit (SNR).

Les registres 11 de chaque canal sont susceptibles de recevoir des données ou des paramètres de configuration provenant des moyens à microprocesseur. Chaque canal est susceptible de transmettre via les registres des données concernant les messages GPS, l'état du code PRN, l'incrément de fréquence relatif à l'effet Doppler, les pseudo-distances et autres données après la corrélation et le verrouillage sur un satellite spécifique.

Les registres tampons 11 sont composés de plusieurs sortes de registres qui sont par exemple les registres de commande et d'états, les registres pour les oscillateurs NCO (Numerically Controlled Oscillator) des canaux, les registres de pseudo-distances, les registres d'énergie, les registres d'écart et d'incrément de la porteuse et du code et des registres de test. Il est à noter que ces registres peuvent accumuler des données pendant la phase de corrélation afin d'être utilisées pendant les procédures d'acquisition et de poursuite des satellites sans forcément être transférées automatiquement au microprocesseur.

Dans une variante de réalisation, un unique bloc de registres 11 peut être envisagé pour tous les canaux 7' de l'étage de corrélation, étant donné que certaines données placées dans le bloc de registres sont communes à chaque canal.

Chaque canal 7' de l'étage de corrélation 7 comprend un corrélateur 8 et un contrôleur 9 destiné à mettre en fonction par un matériel dédicacé notamment l'algorithme de traitement des signaux pour l'acquisition du signal du satellite et la poursuite du satellite détecté par le canal.

Le contrôleur 9 de chaque canal comprend entre autre une unité à mémoires, une unité arithmétique, une unité de synchronisation des bits de données, une unité de commande du corrélateur et une unité d'interruption non visibles sur la figure 1. L'unité à mémoires est composée notamment d'une mémoire RAM pour enregistrer des données momentanées. La mémoire RAM est répartie dans une structure non régulière ou régulière. L'unité arithmétique réalise notamment des opérations d'addition, de soustraction, de multiplication, d'accumulation et de décalage.

Toutes les tâches d'acquisition et de poursuite des satellites détectés sont donc réalisées de manière autonome dans chaque canal respectif de l'étage de corrélation dans une architecture à bits parallèles où le calcul de plusieurs bits est réalisé en une impulsion d'horloge. Les signaux numériques sont à 1 kHz ce qui permet le traitement de manière autonome desdits signaux des boucles d'asservissement de la fréquence porteuse et du code PRN à un taux de fréquence moins important. Lorsqu'un canal a verrouillé sur un satellite, le circuit synchronise le flux de données GPS destiné aux calculs subséquents.

Ainsi, le transfert de données avec les moyens à microprocesseur 12 ne se fait plus pendant toutes les étapes de corrélation. Ce n'est que le résultat de la corrélation de chaque canal 7' de l'étage de corrélation 7 qui est transféré au microprocesseur, en particulier les messages GPS à une fréquence de 50 Hz. Cela a pour conséquence une forte diminution de consommation de courant.

De ce fait, les moyens à microprocesseur 12 comprennent de préférence un microprocesseur 8-bit CoolRISC-816 de EM Microelectronic-Marin SA en Suisse. Ce microprocesseur est cadencé par un signal d'horloge à 4,36 MHz. Les moyens à microprocesseur 12 comprennent également des moyens de mémorisation non représentés dans lesquels toutes les informations concernant la position desdits satellites, leur code de Gold, et ceux qui sont susceptibles d'être visibles par le récepteur GPS terrestre sont enregistrées.

Pendant toutes les procédures de recherche et de poursuite de satellites, les canaux 7' en fonction émettent des signaux d'interruption INT1 à INT12 à destination du microprocesseur pour l'avertir de données qu'il peut prélever. Dès qu'il reçoit des signaux d'interruption, le microprocesseur doit en général parcourir tous les canaux pour savoir de quel canal proviennent les données à prélever. Ces données peuvent concerner par exemple des paramètres de configuration, des messages GPS, l'état du code pseudo-aléatoire PRN, l'incrément de fréquence relatif à l'effet Doppler, des pseudo-distances, des modes de coupure des moyens de réception, l'état d'intégrateurs compteurs et d'autres informations.

Comme plusieurs signaux d'interruption INT1 à INT12 peuvent survenir en même temps, les moyens à microprocesseur 12 peuvent comporter également un décodeur de priorité non représenté des canaux 7' en fonction. Ainsi, le microprocesseur peut accéder directement à un canal prioritaire émetteur d'un signal d'interruption selon un ordre déterminé de priorité.

Dans une autre forme de réalisation non représentée, le décodeur de priorité pourrait aussi être intégré dans l'étage de corrélation.

Un unique substrat semi-conducteur peut contenir aussi bien l'intégralité de l'étage de corrélation avec les registres, le décodeur de priorité, le microprocesseur, ainsi qu'éventuellement une partie du générateur de signaux d'horloge.

Lors de la mise en fonction du récepteur 1, plusieurs canaux 7' de l'étage de corrélation 7 sont configurés par les moyens à microprocesseur 12. La configuration de chaque canal consiste à leur introduire en outre différents paramètres relatifs à la fréquence porteuse et au code PRN d'un satellite spécifique à chercher et à poursuivre. Dans un mode de fonctionnement normal, chaque canal est configuré différemment pour chercher et poursuivre son propre satellite. Comme les canaux en fonction ne peuvent se verrouiller que sur des satellites visibles, il restent plusieurs canaux inutilisés.

On sait que certains des satellites visibles sont situés plus bas sur l'horizon que d'autres. De ce fait, la probabilité que les signaux radiofréquences de ces satellites soient atténués momentanément par un obstacle est plus grande que pour les satellites situés vers le zénith. Dans ce cas, il est judicieux de placer en parallèle de canaux sélectionnés, verrouillés sur de tels satellites, des canaux inutilisés qui sont configurés de telle manière à pallier la perte momentanée de signaux des canaux sélectionnés.

Le ou les canaux inutilisés placés en parallèle des canaux sélectionnés permettent d'avoir une fenêtre de détection du satellite plus grande donc une plus grande dynamique de réception des signaux de satellites comme expliqué en référence aux figures 3 et 4. Si les signaux desdits satellites ne sont plus masqués par des obstacles, ces canaux inutilisés ont tendance à saturer et sont donc inutilisables. Par contre, dès que les signaux sont atténués, les moyens à microprocesseur peuvent prendre les données fournies par le ou les canaux inutilisés mis en fonction en lieu et place du ou des canaux sélectionnés ayant perdu le ou les satellites poursuivis.

A la figure 3 est représenté le corrélateur 8 avec une partie pour la boucle d'asservissement du code PRN et une autre partie pour la boucle d'asservissement de la fréquence de la porteuse. Le corrélateur 8 est identique dans chaque canal 7' de l'étage de corrélation 7, mais peut être configuré différemment dans chaque canal. Pour plus de détails relatifs aux divers éléments de ce corrélateur, le lecteur peut se référer à l'enseignement tiré du livre « Understanding GPS Principles and Applications » au chapitre 5 rédigé par Phillip Ward et de l'éditeur Elliott D. Kaplan (Artech House Publishers, USA 1996) au numéro d'édition ISBN 0-89006-793-7, et notamment aux figures 5.8 et 5.13.

En référence à la figure 3, les signaux intermédiaires IF, représentés sur la figure par une ligne en gras coupée d'une barre oblique définissant 2 bits, sont des signaux complexes (I + iQ) composés d'une composante de signaux en phase I à 1 bit et d'une composante de signaux en quadrature Q à 1 bit. Lesdits signaux intermédiaires IF ont été échantillonnés et quantifiés, et sont passés d'abord à travers des premiers mélangeurs 20 de la porteuse. Un mélangeur ou multiplicateur 21 multiplie les signaux IF par le Cosinus moins i fois le Sinus de la réplique de la porteuse générée en interne afin de tirer des signaux complexes le signal en phase I, tandis qu'un mélangeur ou multiplicateur 22 multiplie les signaux IF par le moins Sinus moins i fois le Cosinus de la réplique de la porteuse générée en interne afin de tirer des signaux complexes le signal en quadrature Q.

Ces signaux Sin et Cos proviennent d'un bloc 45 d'une table COS/SIN du signal de la réplique. Le but de cette première étape dans les premiers mélangeurs 20 est de retirer la fréquence porteuse des signaux portant le message GPS.

Il s'agit après cette opération de trouver l'équivalence du code PRN des signaux d'un satellite à acquérir dans un canal enclenché avec un code PRN généré dans ledit canal correspondant au satellite souhaité. Pour cela, les signaux en phase et en quadrature passent par des seconds mélangeurs 23 pour corréler les signaux I et Q avec une réplique en avance et une réplique en retard du code PRN pour obtenir quatre signaux corrélés. Dans chaque canal de l'étage de corrélation, il n'a été gardé que la réplique en avance et en retard sans tenir compte de la réplique ponctuelle. Cela permet de minimiser le nombre d'éléments de corrélation. Toutefois en supprimant la composante ponctuelle de la boucle d'asservissement du code, une perte du rapport signal sur bruit est constatée de l'ordre de 2,5 dB.

Le mélangeur ou multiplicateur 24 reçoit le signal I et le signal de réplique en avance E (du terme anglais « early ») d'un registre à 2 bits 36 et fournit un signal corrélé en phase en avance. Le mélangeur ou multiplicateur 25 reçoit le signal I et le signal de réplique en retard L (du terme anglais « late ») du registre 36 et fournit un signal corrélé en phase en retard. Le mélangeur ou multiplicateur 26 reçoit le signal en quadrature Q et le signal en avance E, et fournit un signal corrélé en quadrature en avance. Enfin, le mélangeur ou multiplicateur 27 reçoit le signal Q et le signal de réplique en retard L, et fournit un signal corrélé en quadrature en retard. L'écart entre la réplique en avance E et la réplique en retard L est d'un demi chip dans la réalisation de la présente invention, ce qui fait que l'écart avec une composante centrale ponctuelle P est de 1/4 chip. Les multiplicateurs peuvent être réalisés par simplification à l'aide de portes logiques XOR par exemple.

Les quatre signaux corrélés entrent chacun dans un des intégrateurs compteurs 28, 29, 30, 31, qui sont des éléments de pré-détection, dont les mots binaires de sortie I_{ES}, I_{LS}, Q_{ES} et Q_{LS} sont représentés à 10 bits. Le nombre de bits du mot binaire en sortie des intégrateurs compteurs définit la dynamique de réception du récepteur. Il est défini pour pouvoir compter jusqu'à un nombre de 1023 ce qui équivaut au nombre de chips du code PRN. Chaque intégrateur compteur 28, 29, 30, 31 d'un canal sélectionné par les moyens à microprocesseur au début d'une recherche est configuré pour fournir un jeu complet de mots binaires I_{ES}, I_{LS}, Q_{ES} et Q_{LS} toutes les millisecondes.

Par contre, au cas où il est choisi de brancher un canal inutilisé en parallèle d'un canal sélectionné, le canal inutilisé est configuré de manière que la période d'intégration de ses intégrateurs compteurs soit supérieure à la période d'intégration standard. Les moyens à microprocesseur envoie donc des signaux S_{TC} à chaque intégrateur compteur pour lui imposer de compter sur une période plus grande que 1 ms. De préférence, la période d'intégration du canal inutilisé est fixée au double de la période d'intégration standard, mais bien entendu elle pourrait être fixée à un multiple entier M du temps T_{D} (figure 4).

La variation de la période d'intégration des intégrateurs compteurs permet ainsi de régler la sensibilité du récepteur, c'est-à-dire d'augmenter la dynamique de réception des signaux. Cela a pour conséquence que les signaux radiofréquences faibles reçus par le récepteur auront plus de chance d'être au-dessus d'un seuil de détection de chaque intégrateur compteur à la fin de la période d'intégration. Les canaux inutilisés configurés de la sorte ont ainsi plus de chance de poursuivre un satellite dont les signaux ont été masqués par un obstacle que les canaux sélectionnés à configuration conventionnelle.

Le seuil de détection est choisi de telle manière à détecter la présence ou l'absence d'un satellite cherché ou poursuivi en tenant compte que les signaux radiofréquences sont bruyants.

Toutes les opérations dans les boucles qui suivent ces intégrateurs se font dans une architecture à bits parallèles avec des signaux à une fréquence de 1 kHz. Pour éliminer une partie du bruit du signal utile à démoduler, uniquement les 8 bits de poids forts sont utilisés pour la suite de la chaîne de traitement des signaux numériques.

Les mots binaires de sortie I_{ES}, I_{LS}, Q_{ES} et Q_{LS}, représentés sur la figure par une ligne en gras coupée par une barre oblique définissant 8 bits, sont passés dans un discriminateur de boucle de code 32 et dans un filtre de boucle de code 33. Le discriminateur de boucle de code réalise les opérations de calcul de l'énergie des signaux I_{ES}, I_{LS}, Q_{ES} et Q_{LS}. Une accumulation de valeurs pendant un certain nombre N de cycles d'intégration, par exemple 16 cycles, est réalisée dans le discriminateur de code. De ce fait, les moyens à microprocesseur imposent également au discriminateur 32 les signaux S_{TC} pour les canaux inutilisés placés en parallèle de canaux sélectionnés.

Le discriminateur est non-cohérent du type à blocage de boucle de retard (DLL). II est constitué notamment par un multiplicateur 8-bit et par un accumulateur 20-bit. Sur ce discriminateur, une correction est amenée de la boucle de la porteuse, car lors de l'émission du signal par le satellite l'effet Doppler se fait sentir non seulement sur la fréquence porteuse, mais également sur le code PRN qui est modulé sur la fréquence porteuse. L'apport de la porteuse dans le discriminateur de boucle de code correspond à une division par 1540 de l'incrément d'écart de la porteuse.

Suivant le résultat filtré du discriminateur, un incrément de phase est imposé par l'oscillateur NCO 28-bit au générateur de code PRN 35 afin qu'il transmette la série de bits du code PRN au registre 36 pour faire une nouvelle corrélation. La résolution de fréquence de ce NCO 28-bit est de l'ordre de 16 mHz. (pour une fréquence d'horloge de 4,36 MHz).

Les divers résultats de la boucle sont traités par le contrôleur afin qu'il coordonne les opérations d'acquisition et de poursuite. Une fois, qu'il y a synchronisation et verrouillage sur le satellite souhaité les valeurs I_{ES} et I_{LS} sont introduits dans un élément de démodulation 50 capable de fournir le message de données à 50 Hz sur 1 bit par l'intermédiaire du registre d'entrée et de sortie de données aux moyens à microprocesseur. En plus du message, les moyens à microprocesseur peuvent prendre notamment les informations concernant les pseudo-distances insérées dans le registre tampon afin de calculer la position X,Y et Z, la vitesse et l'heure locale précise.

Tous les éléments expliqués ci-dessus ne seront pas décrits de manière plus détaillée, étant donné qu'ils font partie des connaissances générales d'un homme du métier dans ce domaine technique.

La somme des signaux I_{ES} et I_{LS} dans l'additionneur 37 est utilisée pour créer le signal I_{PS} et la somme des signaux Q_{ES} et Q_{LS} dans l'additionneur 38 est utilisée pour créer le signal Q_{PS}, tous deux représentés par 8 bits. Ces mots binaires sont introduits à une fréquence de 1 kHz dans un discriminateur de boucle de porteuse 42 (détection d'enveloppe) pour calculer l'énergie des signaux suivi d'un filtre de boucle de porteuse 43. Le discriminateur est composé notamment d'un multiplicateur 8-bit et d'un accumulateur 20-bit. Il est du type à blocage de boucle de fréquence et de phase.

Une opération de moyenne sur le discriminateur de fréquence est réalisée afin d'accroître la robustesse et la précision des boucles de poursuite de la porteuse. L'accumulation prévue dans le discriminateur dure un nombre N de cycles, par exemple 16 cycles, ce qui correspond à 16 ms. Les moyens à microprocesseur imposent également les signaux S_{TC} au discriminateur 42 pour les canaux inutilisés placés en parallèle de canaux sélectionnés.

Suivant le résultat du discriminateur et après passage à travers le filtre, l'oscillateur NCO 24-bit de la porteuse 44 reçoit un incrément de fréquence (bin) pour la correction de la réplique de la fréquence porteuse. Ce NCO 24-bit a une résolution de fréquence de l'ordre de 260 mHz.

Les deux procédés d'asservissement du code et de la porteuse sont synchronisés durant la poursuite, ceci bien que les boucles de poursuite de la porteuse sont seulement mises à jour après une confirmation de la présence du signal du satellite.

II faut savoir que lors de l'émission des signaux radiofréquences par un satellite, l'effet Doppler a une influence sur lesdits signaux aussi bien sur la fréquence porteuse que sur le code PRN, ce qui fait que les boucles d'asservissement du code et de la porteuse sont reliées l'une à l'autre pour obtenir une meilleure précision d'ajustement de la phase du code PRN et de la fréquence porteuse reçue au récepteur.

A chaque époque de corrélation, la phase du code PRN est retardée par pas de 1 chip. Ceci permet de décaler dans le temps le code afin de trouver l'écart de phase du satellite. Une fois que le satellite a été trouvé, il s'agit de corriger la fréquence porteuse comprenant les effets Doppler ce qui se fait dans une boucle d'asservissement de la porteuse. Il doit être tenu compte en plus des effets Doppler de l'imprécision de l'oscillateur interne et des effets de la ionosphère. Ces erreurs corrigées dans les boucles de code et de porteuse correspondent à un écart de fréquence de ± 7,5 kHz.

Comme il est possible qu'il y ait une coupure des signaux radiofréquences par suite d'un obstacle, un contrôle de coupure est opéré du canal sélectionné en fonction. Dès que ledit canal ne fournit plus de mots binaires en sortie de ses intégrateurs compteurs au-dessus d'un niveau seuil déterminé de détection de satellite, les données du canal inutilisé placé en parallèle sont prises en compte par les moyens à microprocesseur. Comme la période d'intégration est plus longue dans le canal inutilisé, il a ainsi plus de chance de détecter les signaux du satellite visible qui sont affaiblis par l'obstacle.

A titre illustratif, la figure 4 montre un graphique des valeurs de mots binaires lors de l'intégration des intégrateurs compteurs en fonction du temps d'intégration. Dans un cas idéal où il y a une pleine corrélation notamment de la réplique du code avec les signaux intermédiaires, la valeur du mot binaire en sortie d'un intégrateur compteur atteint le maximum, c'est-à-dire 2" ou 1023 avec une réplique du code PRN à la fin de la période d'intégration T_{D}. Au terme de cette période d'intégration, le compteur est remis à zéro pour refaire une nouvelle étape d'intégration comptage.

Pour la présente invention, les canaux sélectionnés pour la recherche et la poursuite de satellites visibles ont une période d'intégration fixée à 1 ms. Par contre, les canaux inutilisés connectés en parallèle des canaux sélectionnés sont configurés avec une période d'intégration plus grande, de préférence de l'ordre de 2 ms. Cependant la plupart du temps la valeur du mot binaire au terme de la période T_{D} lors de la poursuite d'un satellite visible se trouve entre la valeur de capacité maximale et un niveau déterminé de seuil. A chaque impulsion d'horloge T₁ ou CLK, l'intégrateur compteur incrémente ou décrémente le mot binaire en fonction des signaux corrélés qu'il reçoit.

Si un obstacle survient sur le trajet des signaux d'un satellite visible capté par un canal sélectionné du récepteur, il se peut que les intégrateurs compteurs de ce canal fournissent, au terme de chaque période d'intégration T_{D}, des mots binaires dont la valeur est en dessous du niveau seuil. En augmentant la période d'intégration des intégrateurs compteurs, le canal a plus de chance d'éviter de perdre les signaux masqués par l'obstacle.

Comme défini ci-dessus, toutes les informations concernant la position desdits satellites, leur code de Gold, et ceux qui sont susceptibles d'être visibles par le récepteur GPS terrestre sont enregistrés dans une mémoire des moyens à microprocesseur. Habituellement, au départ tous les canaux du récepteur sont configurés de manière conventionnelle afin de rechercher et poursuivre chacun un satellite spécifique. Cependant après cette première phase, uniquement un certain nombre des canaux mis en fonction se sont verrouillés sur un satellite visible. De ce fait, il subsiste après cette étape quelques canaux désactivés ou inutilisés.

Par la suite, les moyens à microprocesseur peuvent réactiver les canaux inutilisés afin de prévenir la perte de signaux de canaux sélectionnés en phase de poursuite de satellites visibles. Pour cela, ces canaux inutilisés, comme défini précédemment, sont placés chacun en parallèle avec un des canaux respectifs en fonction. Les canaux inutilisés sont configurés avec une période d'intégration plus grande que les canaux en fonction de manière à augmenter la dynamique de réception des signaux. En principe, les canaux inutilisés sont connectés en parallèle uniquement avec des canaux verrouillés sur des satellites visibles susceptibles d'avoir des signaux masqués par un obstacle.

Il peut être envisageable également dans une autre méthode de branchement de canaux inutilisés que dès l'enclenchement du récepteur, ce dernier configure de manière conventionnelle uniquement les canaux pouvant se verrouiller sur un satellite spécifique visible. A la suite de quoi, au moins un canal inutilisé est branché en parallèle d'un des canaux en fonction pour prévenir la perte momentanée des signaux masqués par un obstacle.

Si le récepteur GPS équipe un objet portable à faible consommation muni d'une batterie ou d'un accumulateur, il n'est en général pas nécessaire d'enclencher tous les canaux. Au moins quatre canaux verrouillés chacun sur un satellite spécifique visible suffisent à fournir les données aux moyens à microprocesseur pour le calcul de la position, de la vitesse et/ou du temps. Ces quatre canaux sont configurés de manière conventionnelle. Ainsi selon la présente invention, il peut être souhaitable de configurer avec une période d'intégration plus grande d'autres canaux inutilisés placés en parallèle chacun avec un canal respectif sélectionné.

Plusieurs canaux peuvent encore être configurés différemment en parallèle pour rechercher et/ou poursuivre un même satellite susceptible d'avoir ses signaux radiofréquences masqués sur leur trajet. Chaque canal peut être configuré par les moyens à microprocesseur pour avoir un temps d'intégration différent de leurs intégrateurs compteurs. De même, il peut être concevable d'augmenter la période d'intégration des intégrateurs compteurs d'un canal en fonction si les moyens à microprocesseurs constatent que ledit canal ne détecte plus les signaux radiofréquences du satellite visible poursuivi.

A partir de la description qui vient d'être faite de multiples variantes de réalisation du récepteur, notamment du type GPS, peuvent être conçues sans sortir du cadre de l'invention définie par les revendications.

## Revendications

1. Récepteur de signaux radiofréquences émis par des sources émettrices, notamment du type GPS, ledit récepteur comprenant :
- des moyens de réception et de mise en forme avec conversion de fréquence des signaux radiofréquences (3) pour produire des signaux intermédiaires (IF),
- un étage de corrélation (7) composé de plusieurs canaux de corrélation (7') pour recevoir les signaux intermédiaires afin de les corréler, dans des boucles d'asservissement des canaux en fonction, avec des répliques de la fréquence porteuse et du code spécifique de sources émettrices visibles à chercher et à poursuivre, chaque canal étant muni d'un corrélateur (8) dans lequel au moins un intégrateur compteur (28, 29, 30, 31) est susceptible de fournir, au terme de chaque période déterminée d'intégration (T_{D}) des signaux corrélés, un mot binaire de sortie (I_{ES}, I_{LS}, Q_{ES} et Q_{LS}) dont la valeur, comparativement à un niveau de seuil de détection déterminé, permet de détecter la présence ou l'absence de la source émettrice à chercher et à poursuivre,
- des moyens à microprocesseur (12) reliés à l'étage de corrélation pour traiter les données tirées, après corrélation, des signaux radiofréquences, ledit récepteur étant **caractérisé en ce que** les moyens à microprocesseur sont agencés pour configurer au moins un canal inutilisé placé en parallèle avec un des canaux en fonction pour la recherche et/ou la poursuite d'une même source émettrice visible, le canal inutilisé étant configuré de manière que la période d'intégration de son intégrateur compteur soit différente de la période d'intégration de l'intégrateur compteur du canal en fonction.

2. Récepteur selon la revendication 1 pour la réception de signaux radiofréquences émis par des satellites, **caractérisé en ce que** l'étage de corrélation (7) comprend un nombre de canaux de corrélation supérieur au nombre de satellites visibles de manière qu'au moins un canal inutilisé puisse être branché en parallèle avec un canal en fonction pour la recherche et/ou la poursuite d'un même satellite spécifique visible.

3. Récepteur selon la revendication 2, **caractérisé en ce que** le nombre de canaux est supérieur ou égal à 12.

4. Récepteur selon l'une des revendications 1 à 3, **caractérisé en ce que** plusieurs canaux inutilisés sont configurés pour se brancher en parallèle chacun avec un des canaux en fonction, la période d'intégration de l'intégrateur compteur de chaque canal inutilisé étant supérieure à la période d'intégration de l'intégrateur compteur du canal en fonction respectif.

5. Récepteur selon l'une des revendications 1 à 4 pour la réception de signaux radiofréquences émis par des satellites, **caractérisé en ce que** la période d'intégration de l'intégrateur compteur d'un canal en fonction en phase de recherche et/ou de poursuite d'un satellite visible est équivalente à la période de répétition du code spécifique du satellite émetteur, et **en ce que** la période d'intégration de l'intégrateur compteur d'un canal inutilisé configuré pour être branché en parallèle du canal en fonction est supérieure à la période de répétition du code spécifique et de préférence égale au double de cette période de répétition.

6. Récepteur selon l'une des revendications 1 à 5, **caractérisé en ce qu'**un ensemble de registres (11) d'entrée et de sortie de données est placé en interface entre l'étage de corrélation (7) et les moyens à microprocesseur (12) afin de recevoir des données émises par le microprocesseur à destination de l'étage de corrélation et des données fournies de l'étage de corrélation pour le microprocesseur.

7. Récepteur selon la revendication 6, **caractérisé en ce qu'**un ensemble de registres (11) est prévu pour chaque canal (7') de l'étage de corrélation (7).

8. Récepteur selon la revendication 1 pour la réception de signaux radiofréquences émis par des satellites, **caractérisé en ce que**, dans chaque canal, un contrôleur (9), comprenant un algorithme de traitement de signaux numériques, est associé au corrélateur (8) pour permettre, lors de la mise en fonction du canal (7'), d'opérer de manière autonome toutes les tâches de synchronisation pour la recherche et la poursuite d'un satellite indépendamment des moyens à microprocesseur (12).

9. Récepteur selon l'une des revendications précédentes pour la réception de signaux radiofréquences émis par des satellites, **caractérisé en ce que** chaque canal reçoit des signaux intermédiaires complexes composés d'une composante de signaux en phase (I) et d'une composante de signaux en quadrature (Q), **en ce que** chaque corrélateur des canaux comprend :
- des premiers mélangeurs (20) pour la corrélation de la composante de signaux en phase avec une première réplique de la fréquence porteuse et pour la corrélation de la composante de signaux en quadrature avec une seconde réplique de la fréquence porteuse déphasée de 90° de la première réplique de la fréquence porteuse,
- des seconds mélangeurs (23) pour la corrélation du signal de sortie en phase des premiers mélangeurs avec une première réplique en avance du code spécifique et avec une seconde réplique en retard du code spécifique et pour la corrélation du signal de sortie en quadrature des premiers mélangeurs avec la première réplique en avance et avec la seconde réplique en retard, et **en ce que** quatre intégrateurs compteurs (28, 29, 30, 31) par canal reçoivent les signaux corrélés de sortie des seconds mélangeurs afin de fournir chacun un mot binaire de sortie dont la valeur, comparativement au niveau de seuil de détection déterminé, permet de détecter la présence ou l'absence d'un satellite à chercher et à poursuivre.

10. Récepteur selon la revendication 1, **caractérisé en ce que** chaque corrélateur des canaux comprend à la suite des intégrateurs compteurs un discriminateur de porteuse (42) dans la boucle d'asservissement de correction de porteuse et un discriminateur de code (32) dans la boucle d'asservissement de correction de code, chaque discriminateur étant configuré par les moyens à microprocesseur (12) pour prendre en compte des valeurs de sortie des intégrateurs compteurs sur une période de discriminateur N fois supérieure à la période d'intégration, N étant un nombre entier, la période de discriminateur d'un canal inutilisé branché en parallèle d'un canal en fonction étant supérieure à la période de discriminateur du canal en fonction, de préférence égale au double de cette période de discriminateur.

## Patentansprüche

1. Empfänger für Hochfrequenzsignale, die von Senderquellen insbesondere des GPS-Typs ausgesendet werden, wobei der Empfänger umfasst:
- Mittel, die die Hochfrequenzsignale (3) empfangen und mit Frequenzumsetzung formen, um Zwischensignale (ZF) zu erzeugen,
- eine Korrelationsstufe (7), die aus mehreren Korrelationskanälen (7') zusammengesetzt ist, um die Zwischensignale zu empfangen, um sie in Regelungsschleifen der arbeitenden Kanäle mit Antworten der Trägerfrequenz und des bestimmten Codes der zu suchenden und zu verfolgenden erkennbaren Senderquellen zu korrelieren, wobei jeder Kanal mit einem Korrelator (8) versehen ist, in dem wenigstens ein Integrator-Zähler (28, 29, 30, 31) am Ende jeder bestimmten Integrationsperiode (T_{D}) der korrelierten Signale ein binäres Ausgangswort (I_{ES}, I_{LS}, Q_{ES} und Q_{LS}) liefern kann, dessen Wert im Vergleich zu einem bestimmten Erfassungsschwellenpegel ermöglicht, das Vorhandensein oder Fehlen der zu suchenden und zu verfolgenden Senderquelle zu erfassen,
- Mikroprozessormittel (12), die mit der Korrelationsstufe verbunden sind, um die nach der Korrelation extrahierten Daten der Hochfrequenzsignale zu verarbeiten, wobei der Empfänger **dadurch gekennzeichnet ist, dass** die Mikroprozessormittel so beschaffen sind, dass wenigstens ein nicht genutzter Kanal konfiguriert wird, der parallel zu einem der in Betrieb befindlichen Kanäle angeordnet ist, um dieselbe erkennbare Senderquelle zu suchen und/oder zu verfolgen, wobei der nicht genutzte Kanal so konfiguriert ist, dass die Integrationsperiode seines Integrator-Zählers von der Integrationsperiode des Integrator-Zählers des in Betrieb befindlichen Kanals verschieden ist.

2. Empfänger nach Anspruch 1 für den Empfang von von Satelliten ausgesendeten Hochfrequenzsignalen, **dadurch gekennzeichnet, dass** die Korrelationsstufe (7) eine Anzahl Korrelationskanäle umfasst, die größer als die Anzahl erkennbarer Satelliten ist, derart, dass wenigstens ein nicht genutzter Kanal parallel zu einem in Betrieb befindlichen Kanal geschaltet sein kann, um denselben erkennbaren bestimmten Satelliten zu suchen und/oder zu verfolgen.

3. Empfänger nach Anspruch 2, **dadurch gekennzeichnet, dass** die Anzahl von Kanälen größer oder gleich 12 ist.

4. Empfänger nach einem der Ansprüche 1 bis 3, **dadurch gekennzeichnet, dass** mehrere nicht genutzte Kanäle so konfiguriert sind, dass sie jeweils zu einem der in Betrieb befindlichen Kanäle parallel geschaltet sind, wobei die Integrationsperiode des Integrator-Zählers jedes nicht genutzten Kanals größer als die Integrationsperiode des Integrator-Zählers des jeweiligen in Betrieb befindlichen Kanals ist.

5. Empfänger nach einem der Ansprüche 1 bis 4 für den Empfang von von Satelliten ausgesendeten Hochfrequenzsignalen, **dadurch gekennzeichnet, dass** die Integrationsperiode des Integrator-Zählers eines in Betrieb befindlichen Kanals in der Phase des Suchens und/oder des Verfolgens eines erkennbaren Satelliten mit der Wiederholungsperiode des bestimmten Codes des sendenden Satelliten äquivalent ist und dass die Integrationsperiode des Integrator-Zählers eines nicht genutzten Kanals, der so konfiguriert ist, dass er zu dem in Betrieb befindlichen Kanal parallel geschaltet ist, größer als die Wiederholungsperiode des bestimmten Codes und vorzugsweise gleich der doppelten Wiederholungsperiode ist.

6. Empfänger nach einem der Ansprüche 1 bis 5, **dadurch gekennzeichnet, dass** an der Schnittstelle zwischen der Korrelationsstufe (7) und den Mikroprozessormitteln (12) eine Gesamtheit von Dateneingangs- und Datenausgangsregistern angeordnet ist, um von dem Mikroprozessor ausgesendete Daten, deren Ziel die Korrelationsstufe ist, und von der Korrelationsstufe an den Mikroprozessor gelieferte Daten zu empfangen.

7. Empfänger nach Anspruch 6, **dadurch gekennzeichnet, dass** eine Gesamtheit von Registern (11) für jeden Kanal (7') der Korrelationsstufe (7) vorgesehen ist.

8. Empfänger nach Anspruch 1 für den Empfang von von Satelliten ausgesendeten Hochfrequenzsignalen, **dadurch gekennzeichnet, dass** in jedem Kanal eine Steuereinheit (9), die einen Verarbeitungsalgorithmus für digitale Signale enthält, dem Korrelator (8) zugeordnet ist, um bei der Inbetriebsetzung des Kanals (7') zu ermöglichen, selbstständig alle Synchronisationsaufgaben für die Suche und die Verfolgung eines Satelliten unabhängig von den Mikroprozessormitteln (12) auszuführen.

9. Empfänger nach einem der vorhergehenden Ansprüche für den Empfang von von Satelliten ausgesendeten Hochfrequenzsignalen, **dadurch gekennzeichnet, dass** jeder Kanal komplexe Zwischensignale empfängt, die aus einer Inphase-Signalkomponente (I) und aus einer Quadratursignal-Komponente (Q) zusammengesetzt sind,
dass jeder Korrelator der Kanäle umfasst:
- erste Mischer (20) für die Korrelation der Inphase-Signalkomponente mit einer ersten Antwort der Trägerfrequenz und für die Korrelation der Quadratursignal-Komponente mit einer zweiten Antwort der Trägerfrequenz, die zu der ersten Antwort der Trägerfrequenz um 90° phasenverschoben ist,
- zweite Mischer (23) für die Korrelation des Inphase-Ausgangssignals der ersten Mischer mit einer ersten vorauseilenden Antwort des bestimmten Codes und mit einer zweiten nacheilenden Antwort des bestimmten Codes sowie für die Korrelation des Quadratur-Ausgangssignals der ersten Mischer mit der ersten voreilenden Antwort und mit der zweiten nacheilenden Antwort,
und dass vier Integrator-Zähler (28, 29, 30, 31) pro Kanal die korrelierten Ausgangssignale der zweiten Mischer empfangen, um jeweils ein binäres Ausgangswort zu liefern, dessen Wert im Vergleich zu dem bestimmten Erfassungsschwellenpegel ermöglicht, das Vorhandensein oder Fehlen eines zu suchenden und zu verfolgenden Satelliten zu erfassen.

10. Empfänger nach Anspruch 1, **dadurch gekennzeichnet, dass** jeder Korrelator der Kanäle nach den Integrator-Zählern in der Trägerkorrektur-Regelungsschleife einen Trägerdiskriminator (42) und in der Codekorrektur-Regelungsschleife einen Codediskriminator (32) umfasst, wobei jeder Diskriminator durch die Mikroprozessormittel (12) konfiguriert wird, um Ausgangswerte der Integrator Zähler in einer Diskriminatorperiode, die N-mal größer als die Integrationsperiode ist, wobei N eine ganze Zahl ist, zu berücksichtigen, wobei die Diskriminatorperiode eines nicht genutzten Kanals, der zu einem in Betrieb befindlichen Kanal parallel geschaltet ist, größer als die Diskriminatorperiode des in Betrieb befindlichen Kanals, vorzugsweise gleich der doppelten Diskriminatorperiode, ist.

## Claims

1. Receiver for radio-frequency signals transmitted by transmitting sources, in particular of the GPS type, said receiver including:
- receiving and shaping means with frequency conversion for the radio-frequency signals (3) for generating intermediate signals (IF),
- a correlation stage (7) formed of several correlation channels (7') for receiving the intermediate signals in order to correlate them, in operating channel control loops, with frequency carrier and specific code replicas of visible transmitting sources to be searched and tracked, each channel being provided with a correlator (8) in which at least one integrator counter (28, 29, 30, 31) is capable of providing, at the end of each determined integration period (T_{D}) of the correlated signals, a binary output word (I_{ES}, I_{LS}, Q_{ES}, Q_{LS}) whose value, compared to a determined detection threshold level, allows detection of the presence or absence of the transmitting source to be searched and tracked,
- microprocessor means (12) connected to the correlation stage for processing the data extracted, after correlation, from the radio-frequency signals, said receiver being **characterised in that** the microprocessor means are arranged to configure at least one unused channel placed in parallel with one of the operating channels for searching and/or tracking the same visible transmitting source, the unused channel being configured so that the integration period of its integrator counter is different from the integration period of the integrator counter of the operating channel.

2. Receiver according to claim 1, for receiving radio-frequency signals transmitted by satellites, **characterised in that** the correlation stage (7) includes a greater number of correlation channels than the number of visible satellites so that at least one unused channel can be connected in parallel with an operating channel for searching and/or tracking the same specific visible satellite.

3. Receiver according to claim 2, **characterised in that** the number of channels is greater than or equal to 12.

4. Receiver according to any of claims 1 to 3, **characterised in that** several unused channels are configured to be connected each in parallel with one of the operating channels, the integration period of the integrator counter of each unused channel being greater than the integration period of the integrator counter of the respective operating channel.

5. Receiver according to any of claims 1 to 4 for receiving radio-frequency signals transmitted by satellites, **characterised in that** the integration period of the integrator counter of a channel operating in visible satellite searching and/or tracking phase is equivalent to the repetition period of the specific code of the transmitting satellite, and **in that** the integration period of the integrator counter of an unused channel configured to be connected in parallel to the operating channel is greater than the specific code repetition period and preferably equal to double said repetition period.

6. Receiver according to any of claims 1 to 5, **characterised in that** a set of data input and output registers (11) is placed as an interface between the correlation stage (7) and the microprocessor means (12) in order to receive data transmitted by the microprocessor to the correlation stage and data provided by the correlation stage for the microprocessor.

7. Receiver according to claim 6, **characterised in that** a set of registers (11) is provided for each channel (7') of the correlation stage (7).

8. Receiver according to claim 1 for receiving radio-frequency signals transmitted by satellites, **characterised in that**, in each channel, a controller (9), including a digital signal processing algorithm, is associated with the correlator (8) to allow all the synchronisation tasks for searching and tracking a satellite to be performed autonomously independently of the microprocessor means (12), when the channel (7') is set into operation.

9. Receiver according to any of the preceding claims for receiving radio-frequency signals transmitted by satellites, **characterised in that** each channel receives complex intermediate signals formed of an in-phase signal component (I) and a quarter-phase signal component (Q), **in that** each correlator of the channels includes:
- first mixers (20) for correlating the in-phase signal component with a first carrier frequency replica and for correlating the quarter-phase signal component with a second carrier frequency replica offset by 90° with respect to the first carrier frequency replica;
- second mixers (23) for correlating the output in-phase signal of the first mixers with a first early specific code replica and with a second late specific code replica and for correlating the quarter-phase output signal of the first mixers with the first early replica and the second late replica, and **in that** four integrator counters (28, 29, 30, 31) per channel receive the correlated output signals from the second mixers in order to each provide a binary output word whose value, compared to the determined detection threshold level, allows detection of the presence or absence of a satellite to be searched and tracked.

10. Receiver according to claim 1, **characterised in that** after the integrator counters, each channel correlator includes a carrier discriminator (42) in the carrier correction control loop and a code discriminator (32) in the code correction control loop, each discriminator being configured by the microprocessor means (12) to take account of the output values of the integrator counters over a discriminator period N times greater than the integration period, N being an integer number, the discriminator period of an unused channel connected in parallel to an operating channel being greater than the discriminator period of the operating channel, preferably equal to double said discriminator period.
